# EUROPEAN PATENT SPECIFICATION

(11) **EP 2 174 059 B1**
(45) Date of publication and mention of the grant of the patent: **11.10.2017**
(21) Application number: 08766664.0
(22) Date of filing: 30.06.2008
(51) Int. Cl.: G02B 5/02, F21V 8/00, G02B 6/04

(54) **COLOR-VARIABLE OPTICAL FIBER ILLUMINATION DEVICE**
FARBVERÄNDERLICHE LICHTLEITERBELEUCHTUNGSVORRICHTUNG
DISPOSITIF D'ÉCLAIRAGE À FIBRES OPTIQUES DE DIFFÉRENTES COULEURS

(30) Priority: 30.07.2007 KR 20070076472
(43) Date of publication of application: 14.04.2010
(73) Proprietor: Industry-Academic Cooperation Foundation, Yonsei University, Seodaemun-gu Seoul 120-749 (KR); LT Electronics Co., Ltd., Gunpo-si Gyeonggi-do 435-824 (KR)
(72) Inventor: LEE, Joo-hyeon, Seoul 157-863 (KR); HONG, Soon-kyo, Seoul 137-865 (KR); LEE, Young-jin, Seoul 158-753 (KR)
(74) Representative: Isarpatent
(86) International application number: PCT/KR2008/003798
(87) International publication number: WO 2009/017307

(56) References cited:
- WO-A1-00/06943
- JP-A- H07 212 537
- JP-A- 2004 124 049
- KR-B1- 100 712 738
- US-A- 1 960 618
- US-A1- 2005 011 667
- US-B1- 6 354 724
- US-B1- 6 547 400

## Description

The present invention relates to a color-variable optical fiber illumination device according to the preamble of claim 1, which is known from JP H07 212 537 A.

WO 00/06943 discloses an interactive light display including multiple LED's selectively arranged to provide a light display, each of the LED's being capable of a plurality of activation states. Multiple fiber optic strands are also included, each strand having one end near one of the LED's and extending away from the LED to carry light outward from the LED. A computer is used for controlling the activation state of each of the LED's allowing a wide variety of routines to be run with the display.

### Background Art

In general, an optical fiber represents a higher refractive index of light at an outer portion thereof and a lower refractive index of light at an inner portion thereof so that a total reflection phenomenon occurs in the optical fiber.

The optical fiber must include a material having a higher transparent property in order to reduce optical loss when transmitting light. For this reason, high purity quartz or polymer materials having superior optical properties are used for the optical fiber.

Recently, the optical fiber is extensively used in an advertisement field by allowing the optical fiber to display various colors.

If light having a predetermined color is irradiated onto the optical fiber which is densely set in the form of characters and figures, the light travels through the optical fiber so that the optical fiber serves as a neon sign.

Since the optical fiber has characteristics of glass fiber, the optical fiber can transmit the light at a high speed and high brightness so that various types of color animations can be displayed by using the optical fiber. In addition, various types of advertisements can be expressed by adjusting the thickness of the optical fiber.

Since the optical fiber uses the light, the optical fiber is suitably used at night or in a dark place. Therefore, visibility can be remarkably improved if clothes or fabrics are fabricated by using an optical fiber yarn.

That is, if the clothes or fabrics are woven by using the optical fiber yarn, the clothes or fabrics can be advantageously utilized for rescue, military use, or leisure activity.

When a light source generates light, the light is transferred to the optical fiber so that light emission may occur at a cutting section of the optical fiber.

### Disclosure of Invention

### Technical Problem

Meanwhile, an LED displaying red, green and blue colors corresponding to three primary colors of light (hereinafter, referred to as 'RGB') is used to display various colors through the optical fiber.

However, according to the conventional technology, afterglow of a previous color remains at the moment of a color conversion, so the afterglow of the previous color is mixed with the color of next light, thereby causing a problem of displaying unspecified colors.

The present invention has been made to solve the above problem occurring in the prior art, and an object of the present invention is to provide a color-variable optical fiber illumination device, capable of clearly displaying colors during a color conversion by installing an afterglow absorption member, which absorbs afterglow to prevent the afterglow from being transferred to the optical fiber.

### Technical Solution

The foregoing and and/or other aspects of the present invention are achieved by providing a color-variable optical fiber illumination device as defined in independent claim 1.

### Advantageous Effects

As described above, the afterglow absorption member absorbs afterglow of a previous color, so that the after glow of the previous color is prevented from being mixed with afterglow of a next color, thereby clearly and precisely displaying the colors.

### Brief Description of the Drawings

FIG. 1 is an exploded perspective view representing a color-variable optical fiber illumination device according to the present invention; and
FIGS. 2 and 3 are assembled sectional views representing the color-variable optical fiber illumination device according to the present invention.

### Mode for the Invention

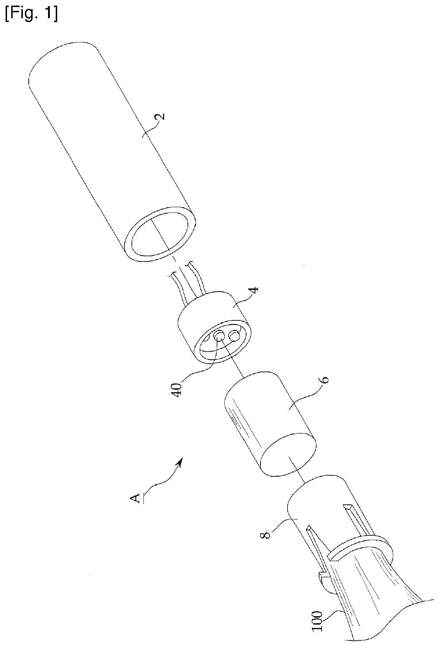

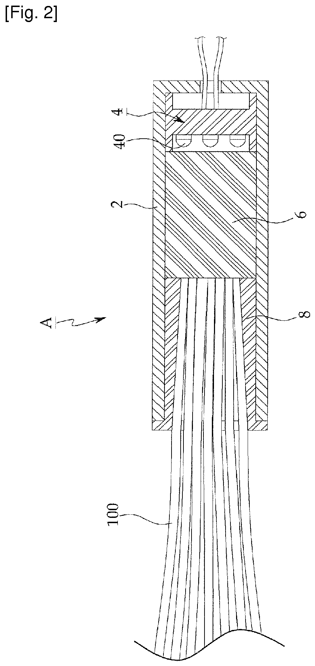

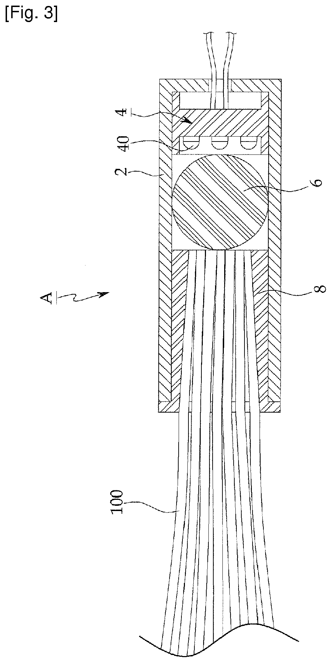

Hereinafter, a preferred embodiment of the present invention will be described in detail with reference to accompanying drawings.
color-variable optical fiber illumination device according to
FIG. 1 is an exploded perspective view representing a color-variable optical fiber illumination device according to the present invention, and FIGS. 2 and 3 are assembled sectional views representing the color-variable optical fiber illumination device according to the present invention.

As shown in FIGS. 1 and 2, a color-variable optical fiber illumination device (A) includes an RGB Light source unit 4 provided with red, green and blue LEDs, a controller, a coupling member 2 to which the RGB light source unit 4 is coupled, an afterglow absorption member(6), which is buried in the coupling member 2 and has a first side making contact with the RGB light source unit 4, and a socket 8, which is inserted into the coupling member 2 while fixing a bunch of optical fibers 100 to support a second side of the afterglow absorption member 6.

The RGB light source unit 4 has three-color LEDs 40, which are mounted on a substrate to form red R, green G and blue B colors corresponding to three primary colors of light. The three-color LEDs 40 are turned on/off independently or simultaneously to display a single color or mixed colors according to an operational signal of the controller.

The coupling member 2 is provided in the form of a cylindrical body having a hollow structure, which has an opening at both ends thereof. The RGB light source unit 4 is fixedly inserted into one opening of the coupling member 2.

The afterglow absorption member 6 includes transparent glass or synthetic resin. A surface of the afterglow absorption member 6 is etched to improve dispersibility of light.

The afterglow absorption member 6 is classified into a binder ball, a glass ball, a plastic ball and a crystal ball.

That is, the afterglow absorption member 6 has a cylindrical shape as shown in FIGS. 1 and 2. Meanwhile, the afterglow absorption member 6 may have a spherical shape as shown in FIG. 3.

Hereinafter, the operation of the present invention will be described.

The RGB light source unit 4 is inserted into the coupling member 2. In addition, a controller (not shown) and a power supply (not shown) are connected to the RGB light source unit 4.

The controller controls a lighting sequence and a lighting time of the LEDs 40 in the RGB light source unit 4.

The afterglow absorption member 6 is inserted into the coupling member 2 such that the afterglow absorption member 6 can adhere to the RGB light source unit 4.

The socket 8 for binding the bunch of optical fibers 100 is inserted into the coupling member 2 and adheres to the afterglow absorption member 6, thereby completing a coupling process of the color-variable optical fiber illumination device according to the present invention.

The LED 40 of the RGB light source unit 4 is turned on according to a signal of the controller. For example, afterglow remaining after the turn-off of the red LED is absorbed by the afterglow absorption member 6 so that the afterglow is eliminated.

Since an afterglow absorption process is achieved within a short period of time, the afterglow is eliminated before the afterglow is transferred to the optical fibers 100. Accordingly, a mixture of color due to the afterglow is not visible to the outside.

Accordingly, the color-variable optical fiber illumination can instantly convert colors and clearly and exactly display colors.

Although few embodiments of the present invention have been shown and described, it would be appreciated by those skilled in the art that changes may be made in these embodiments without departing from the principles and sprit of the invention, the scope of which is defined in the claims and their equivalents.

## Claims

1. A color-variable optical fiber illumination device comprising:
an RGB light source unit (4) equipped with red, green and blue LEDs;
a controller;
a coupling member (2) to which the RGB light source unit (4) is coupled;
an afterglow absorption member (6) which is buried in the coupling member (2) and has one side making contact with the RGB light source unit (4); and
a socket (8), which is inserted into the coupling member (2) to make contact with the afterglow absorption member (6) while fixing a plurality of optical fibers 100;
**characterized in that**
a surface of the afterglow absorption member (6) is etched to disperse light.

2. The color-variable optical fiber illumination device as claimed in claim 1, wherein the coupling member (2) is provided in a form of a cylindrical body having a hollow structure, which has openings at both ends thereof, in which the RGB light source unit (4) is fixedly inserted into one opening of the coupling member (2).

3. The color-variable optical fiber illumination device as claimed in claim 1, wherein the afterglow absorption member (6) has a cylinder shape or a sphere shape and includes transparent materials.

4. The color-variable optical fiber illumination device as claimed in claim 1 or 3, wherein the afterglow absorption member (6) includes any one selected from a binder ball, a glass ball, a plastic ball and a crystal ball.

## Patentansprüche

1. Farbvariable faseroptische Beleuchtungsvorrichtung, die Folgendes umfasst:
eine RGB-Lichtquelleneinheit (4), die mit roten, grünen und blauen LEDs versehen ist;
eine Steuereinheit;
ein Kopplungselement (2), mit dem die RGB-Lichtquelleneinheit (4) gekoppelt ist;
ein Nachleuchtabsorptionselement (6), das in dem Kopplungselement (2) vergraben ist und eine Seite hat, die einen Kontakt mit der RGB-Lichtquelleneinheit (4) herstellt; und
eine Fassung (8), die in das Kopplungselement (2) eingefügt wird, um einen Kontakt mit dem Nachleuchtabsorptionselement (6) herzustellen, während sie mehrere optische Fasern 100 fixiert,
**dadurch gekennzeichnet, dass**
eine Oberfläche des Nachleuchtabsorptionselements (6) geätzt ist, um Licht zu streuen.

2. Farbvariable faseroptische Beleuchtungsvorrichtung nach Anspruch 1, wobei das Kopplungselement (2) die Form eines zylindrischen Körpers aufweist, der eine hohle Struktur hat und Öffnungen an seinen beiden Enden aufweist, wobei die RGB-Lichtquelleneinheit (4) fest in eine Öffnung des Kopplungselements (2) eingesetzt ist.

3. Farbvariable faseroptische Beleuchtungsvorrichtung nach Anspruch 1, wobei das Nachleuchtabsorptionselement (6) eine Zylinderform oder eine Kugelform hat und transparente Materialien enthält.

4. Farbvariable faseroptische Beleuchtungsvorrichtung nach Anspruch 1 oder 3, wobei das Nachleuchtabsorptionselement (6) eines von Folgendem umfasst: eine Bindemittelkugel, eine Glaskugel, eine Kunststoffkugel, und eine Kristallkugel.

## Revendications

1. Dispositif d'éclairage par fibres optiques à couleurs variables, comprenant :
une unité formant source de lumière RVB (4) équipée de diodes électroluminescentes rouge, verte et bleue ;
un dispositif de commande ;
un élément de couplage (2) auquel l'unité formant source de lumière RVB (4) est couplée ;
un élément d'absorption de luminescence résiduelle (6) qui est incorporé dans l'élément de couplage (2) et dont un côté fait contact avec l'unité formant source de lumière RVB (4) ; et
une douille (8) qui est insérée dans l'élément de couplage (2) pour faire contact avec l'élément d'absorption de luminescence résiduelle (6), tout en fixant une pluralité de fibres optiques (100),
**caractérisé en ce que** :
une surface de l'élément d'absorption de luminescence résiduelle (6) est gravée pour disperser la lumière.

2. Dispositif d'éclairage par fibres optiques à couleurs variables selon la revendication 1, dans lequel l'élément de couplage (2) se présente sous la forme d'un corps cylindrique possédant une structure creuse qui présente des ouvertures à ses deux extrémités, dans lequel l'unité formant source de lumière RVB (4) est insérée à demeure dans une ouverture de l'élément de couplage (2).

3. Dispositif d'éclairage par fibres optiques à couleurs variables selon la revendication 1, dans lequel l'élément d'absorption de luminescence résiduelle (6) a une forme de cylindre ou une forme de sphère et comporte des matériaux transparents.

4. Dispositif d'éclairage par fibres optiques à couleurs variables selon la revendication 1 ou 3, dans lequel l'élément d'absorption de luminescence résiduelle (6) inclut une boule quelconque choisie parmi une boule de liant, une boule de verre, une boule de matière plastique et une boule de cristal.
